# EUROPEAN PATENT APPLICATION

(11) **EP 1 492 260 A1**
(43) Date of publication of application: **29.12.2004**
(21) Application number: 03425414.4
(22) Date of filing: 25.06.2003
(51) Int. Cl.: H04J 14/02

(54) **Optical ADD-DROP multiplexer for WDM systems**

(71) Applicant: CNX S.p.A., 20126 Milano (IT); Siemens Aktiengesellschaft, 80333 München (DE)
(72) Inventor: Crognale, Claudio, 66034 Lanciano (IT); Saracino, Sante, 02015 Città Ducale (IT)
(74) Representative: Giustini, Delio

(57) **Abstract**

The present invention relates to the optical metropolitan networks and in particular to a device that allows, by using optical filtering, selection and blocking functions, the transit and the extraction of a plurality of multiplexed optical signals, each of them characterized by a different wavelength, and the insertion of a further plurality of optical signals.

The basic block, named "Tunable Filter & Blocker Pluggable" **(TF&BP),** consists of six fundamental elements: a wavelength tunable optical filter, a blocking tunable filter, a 1x2 optical splitter, a two 1x2 optical switches and an 4x1 optical combiner .

The flexibility and the filtering performances of the module TF&BP are then improved introducing an interleaving filtering element and thus obtaining a new basic unit named Interleaved Tunable Filter & Blocker **(ITF&B)** module (Fig. 1).

## Description

### Field of the invention

It is even superfluous highlighting the importance of the WDM technique (Wavelength Division Multiplexing) in the modern optical fibre transmission systems. In fact, it is well-known the enormous transmissive capacity of the WDM systems (thousands of Gb/s) on a single optical fibre, even for very long distances (hundreds of km). Up to now, the great potentialities offered by this kind of multiplation has typically been devoted to the data transmission over large networks. Nevertheless, nowadays, there is the necessity to transmit a large quantity of data even in the metropolitan area and the WDM techniques have revealed particularly suitable also for this kind of applications. In a metropolitan ring structure, each node must be able to extract and add optical channels, and leave the others passing through without expensive electro-optic conversion. Such functionalities are now implemented in devices which are identified as Optical Add-Drop Multiplexer (OADM). These devices, by definition, must be able to manage a fixed number of WDM signals at 2.5, 10 and 40 Gb/s that are typically transmitted with a wavelength spacing of 0.4 and 0.8 nm, according the ITU-T G.692 Recommendation.

### Background art

The structure of an OADM node has been given, until now, one the following three different solutions.

In a first architecture, the OADM is made up of the following fundamental elements (see, for example, the module COADM-SN4-200 developed by JDS Uniphase and WO 9960740):
- An optical WDM demultiplexer/multiplexer couple, that works on assigned, fixed and contiguous wavelengths. These devices are, generally, AWG (Arrayed Wave guide) demultiplexer/multiplexer, characterized by good performances in terms of cost, crosstalk, insertion losses and shape of the channel filters. Some makers offer demultiplexing or multiplexing modules integrating an extraction or insertion capability within the ITU-T grating with 1.6 nm spacing (for example, see the Santec TWDM-700/ 700AD product, " tunable WDM module").
- 1x2 or 2x2 optical switches (as in the patent mentioned above), based on different technologies (micro-mechanics, planar waveguides, SOA and so on) which allow, through the application of a voltage control signal, the extraction or insertion of different optical channels.

In this OADM, the optical de-multiplexer at the input of the equipment, separates and, generally, filters the signals with different, assigned wavelength. Successively, the signals are separately sent to the switches and then subjected to the extraction/insertion procedure. Afterward, the WDM signals are individually routed to the optical multiplexer, where they are combined and sent to the OADM output port.

In a second architecture, the OADM consists of the following basic elements.
- A "Wavelength Blocker" (WB), a device able to block, in a selective and remotely controlled way, some of the components of an optical WDM comb (typically with a spacing of 0.4 and 0.8 nm) received at its input. Such device is normally very expensive, because still implemented with sophisticated technology based on liquid crystals (see "Dynamically Reconfigurable Wavelength Blocker for C or extended L band", reported on the JDSU http site:// www.jdu.com).
- A 1x2 optical splitter.
- A 1xN optical splitter.
- A 2x1 optical combiner.
- A Nx1 optical combiner.
- Tunable optical filters, available in various technologies (thin-film, Fabri-Perot and so on).

In this solution, the WDM signals are sent to the 1x2 splitter. One of the two outputs of the splitter is connected to the input of the 1xN splitter (the "N" outputs of the splitter 1xN are connected to the inputs of N tunable filters); the other is connected to the input of the WB. N signals, each of them with a different wavelength, are therefore available at the "N" filtered outputs of the splitter. These N signals, passing through a WB, can be individually blocked and replaced with other inserted signals. Normally, these signals are added by delivering the output of the WB and the output of an Nx1 combiner to the two inputs of a 2x1 combiner. The output of the 2x1 combiner is then routed to the egress port fibre.
In a third architecture, combination of tunable filters, 2x2 optical switches, star-couplers and wavelengths converters (see WO 98/ 18231) are generally employed.

The first one of the three solutions mentioned above is a low cost scalable structure, with good optical transmission performances achieved with the optical noise filtering of the demultiplexing/multiplexing devices.

However, this structure when implemented with AWG is anyway able to manage only optical-carriers with fixed and contiguous wavelengths and, therefore, don't allow a suitable dynamic management of wavelengths included in the ITU-T standards. Improvements are achievable by the use of selectable demultiplexing/multiplexing modules with integrated extraction/insertion capability. They become very attractive for their configurability but nevertheless don't cover all functions normally required for an OADM (for example, see Santec product TWDM-700/ 700AD, "WDM tunable module").
In this first architecture, the OADM consists of a "mirrorlike" structure with multiplexing and demultiplexing devices placed at both of its ends.
Such "mirror-like" structure, even if provided of selectable demultiplexing/multiplexing modules, entails a redundancy having a very negative impact in terms of transmission loss, reconfiguration speed and overall cost.

The second solution, thanks to the WB, offers optical transparency and flexibility but is very expensive and not very suitable for an economic transition from a small to a large range of wavelengths. In fact, in such a device, the blocking function of the different carriers cannot be gradually increased according to the number of managed wavelengths, because the blocking capability of the WB is rigorously fixed in terms of wavelength range and spacing. Moreover, due to the absence of optical filtering elements, the OADM based on WB is vulnerable to the noise propagation. Finally, nowadays the technology of these devices doesn't allow the management of DWDM systems at 2.5 Gb/s with 0.2 nm spacing.

In the third case (see WO 98/ 18231), excellent performances in terms of reconfigurability and noise filtering are obtained at the expense of an evident architecture complexity and high quality and expensive optical components.

So, in this respect, the structure disclosed in WO 98/18231 shows a redundancy which is not required and more of all not sustainable, in the case of a metro OADM.

Additionally, the presence of passive elements as the "star-couplers" makes it not very scalable.

### Objects of the Invention

The main object of the present invention is to overcome the drawbacks of the known art and to design a new architecture offering valuable scalability and reconfigurability features together with good transmission performances and ease of channel management control.

### Summary of invention

The present invention, provides an optical add/drop multiplexer (OADM) for a wavelength division multiplexed communication network, comprising a first module named "Interleaved Tunable Filter & Blocker Module" and a second module named "Tunable Filter & Blocker Pluggable", as disclosed in the claims.

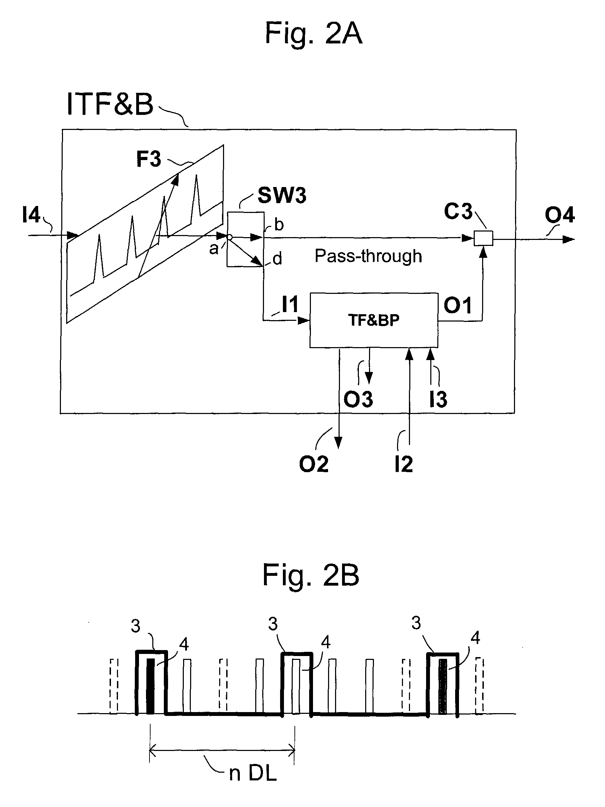

The basic architecture, as represented in Fig 2A, consists of the following fundamental elements:
- An interleaving optical tunable filter (**F3**); with a characteristic transmission function shown in Fig. 2B;
- One 1x2 optical switch (**SW3**);
- A **TF&BP** module;
- A 2x1 optical combiner (**C1**).

In this structure (Fig. 2A), by remote control, the interleaving filtering element F3 selects, among all the wavelengths at its input I4, a subset of carriers spaced of nDL nm.

The carrier subset coming out of the filter F3 can be sent to the input of a module TF&BP that is used to select ( drop and/or insert) a wavelenght belonging to the subset produced by the F3 filter.

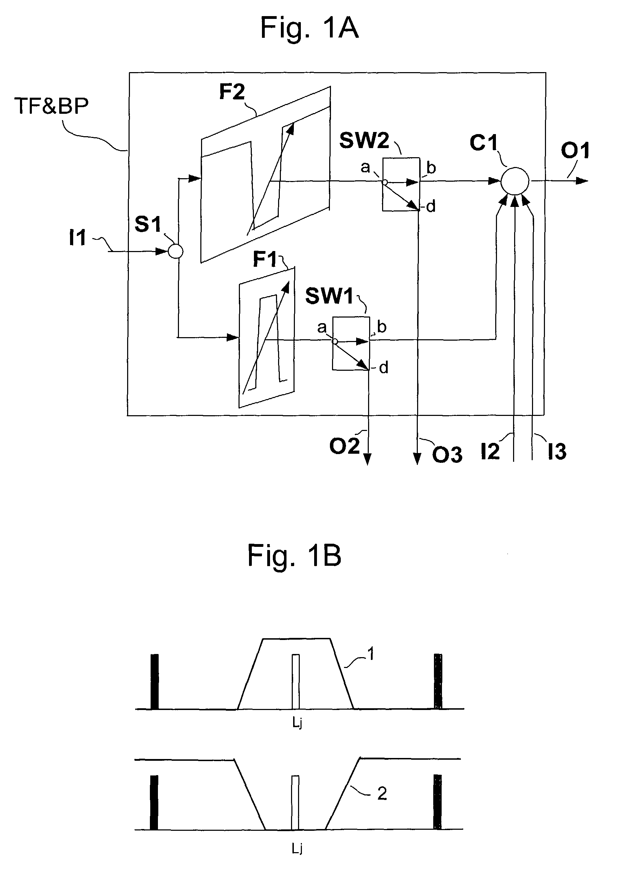

The module **"Tunable Filter & Blocker Pluggable" (TF&BP;** Fig. 1A) consists of six fundamental elements:
- A selective optical tunable filter (**F1**);
- A blocking tunable filter (**F2**);
- A 1x2 optical splitter (**S1**);
- Two 1x2 optical switches (**SW1**, **SW2**);
- A 4x1 optical combiner (**C1**).

The module allows to extract (from O2) and insert (through I2) any wavelength and allows to make a cascading configuration of modules by using the couple of ports O3, I3, as it will be clearly shown in the drowings and in the description of a preferred embodiment of the invention.

The flexibility and the filtering performances of the module TF&BP are improved introducing the interleaving filtering element F3 privided in the ITF&B module.

If the module ITF&B works like a "Pass-Through" device (it only selects a pre-defined subset of carriers, which are routed to the output O4) then the module TF&BP is completely by-passed and therefore could be not inserted. The possibility to insert/deinsert the TF&BP module in the modular unit ITF&B , according to the node needs, justifies the attribute of "Pluggable" given to it.

According to a second aspect of the invention, the totality of carriers at the input of a first TF&BP module, can be managed, in terms of extraction, insertion and transit operations (100% add/drop capacity), through the cascade of n identical TF&BP modules, where n coincides with the number of wavelengths to be extracted/inserted.

According to a third aspect of the invention, this provides a optical add/drop multiplexer (OADM) for a wavelength division multiplexed communication network comprising the ITF&B configuration module selecting, among all the wavelengths at its input, a subset of carriers, spaced of nDL nm, managed, in terms of extraction, insertion and transit operations, through the cascade of n identical TF&BP modules, where n coincides with the number of wavelengths to be extracted/inserted.

According to a fourth aspect of the invention, this provides a optical add/drop multiplexer (OADM) for a wavelength division multiplexed communication network comprising a solution, named (N,n)ITF&BGroup, based on the module ITF&B.

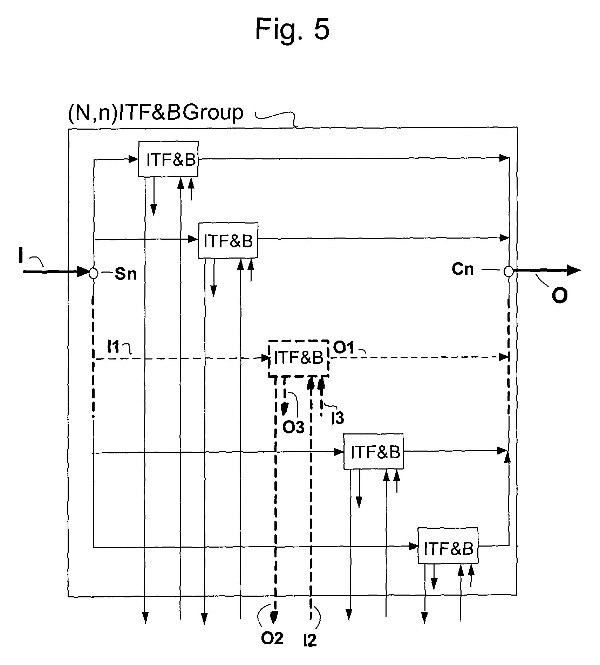

The Fig. 5 shows such (N,n)ITF&BGroup structure, consisting of n modular units ITF&B.

The input WDM signal is sent to the ITF&B modules by a splitter 1xn.

The output of the ITF&B modules is connected to the n inputs of a nx1 optical combiner Cn so that both the passing-through components, together with those inserted through I2 of the ITF&B modules, will reappear at the output O of the combiner Cn, as the resulting multiplexed signal exiting the OADM.

That architecture allows the implementation of an OADM suitable also for very dense WDM metro application.

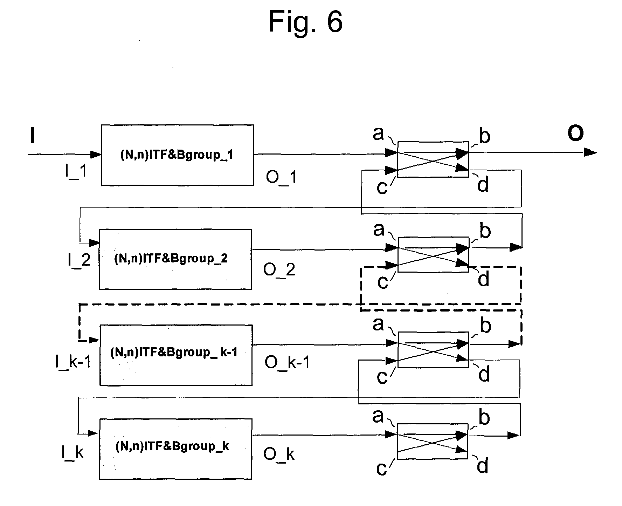

According to a fifth aspect of the invention the number of carriers to extract/insert can be progressively increased, by multiples of n, simply replicating, according to the cascading configuration of Fig. 6, the functional group (N,n)ITF&BGroup previously described.

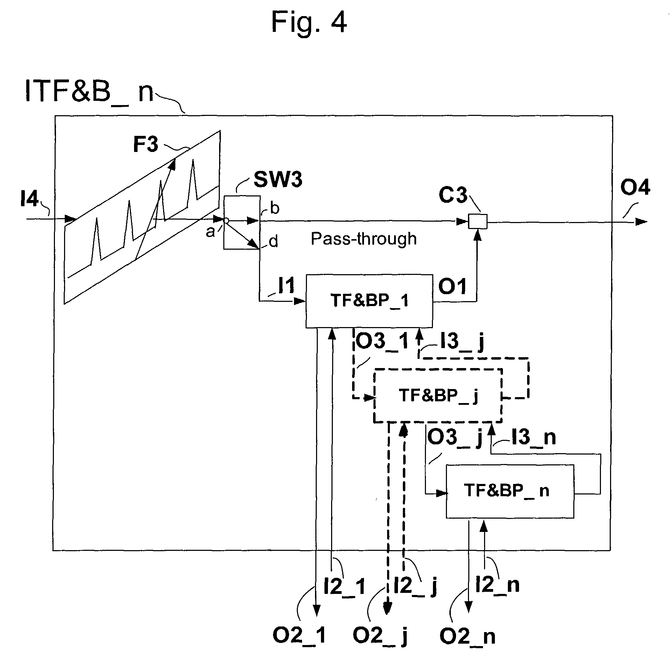

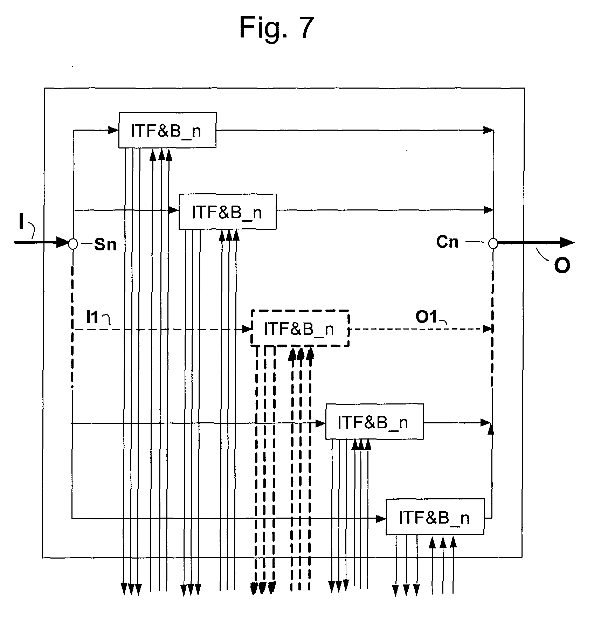

According to a further aspect of the invention, depicted in Fig.7, the number of carriers to extract/insert by an (N,n)ITF&BGroup can be progressively increased, using the ports I3/O3 of each module ITF&B, to add, according to a cascading configuration as described in Fig. 4, a number of modules TF&BP equal to the number of wavelengths, belonging to the interleaved subset selected by the filter F3, that must be extracted/inserted.

A preferred embodiment of the present invention therefore provides a multiwavelength OADM that alleviates totally or in part the drawbacks of the prior art OADMs. More specifically, the preferred embodiment comprises the architecture of the modules TF&BP and ITF&B which allow the implementation of flexible and scalable OADM solutions fitting the requirements of any specific network.

### Brief description of the drawings.

Further advantages, characteristics and conditions of use will be apparent from the more particular description of exemplary embodiment, which is shown as an example but and without introducing any limitation, as illustrated in appended drawings, were:
**Figure 1A** describes a block diagram of a Tunable Filter & Blocker Pluggable Module (TF&BP);
**Figure 1B** describes the characteristic transmission function of tunable filters F1, F2;
**Figure 1C** describes the basic scheme for a daisy-chain configuration of n TF&BP modules;
**Figure 2A** describes a block diagram of the Interleaved Tunable Filter & Blocker Module (ITF&B);
**Figure 2B** describes the characteristic transmission function of the Interleaved Tunable Filter F3;
**Figure 3A** describes the characteristic filtering shape of an Interleaved Tunable Filter;
**Figure 3B** describes the characteristic filtering shape of a Selective Tunable Filter;
**Figure 3C** describes the characteristic filtering shape of a Blocking tunable Filter;
**Figure 4** describes the basic scheme for an N channels OADM realized employing the ITF&B module and a daisy-chain configuration of n TF&BP modules;
**Figure 5** describes the basic scheme for an n/N channel OADM realized employing n ITF&B modules: (N, n) ITF&B Group;
**Figure 6** shows an example of scalability: (N, n) ITF&B Group modules stacked by means of 2x2 optical switches.
**Figure 7** shows an example of scalability realized employing the ITF&B module and a daisy-chain configuration of n TF&BP modules based on an (N, n) ITF&B Group.

### Detailed description of a preferred embodiments of the invention

The embodiments illustrated in the figures and described hereafter, refer to the OADM architectures that are the object of the invention.

The block in Fig.1A, named **"Tunable Filter & Blocker Pluggable" (TF&BP)** is at the basis of the claimed OADM. It consists of six fundamental elements as described in the following:
- A 1x2 optical splitter **S1**, with one input two outputs, able to split the input signal **I1** onto two identical, but attenuated, replica at its output.
- An optical wavelength tunable filter **F1**, receiving the input signal from the splitter S1, with a characteristic transmission function **1** (Fig. 1B), fixed "ab initio" and able to select either a single optical wavelength **Lj** within the ITU-T grid (Racc. G.692) in the third optical window band (1480-1620 nm) or any contiguous group of wavelengths in the same grid.
- A 1x2 optical switch, **SW1,** receiving at the input **a** the signal from the filter F1 and having two outputs: **b** and **d**. The application of a dedicated control signal allows the routing of the input signal to one of the two outputs.
- A blocking tunable filter **F2**, with a characteristic transmission function **2** (Fig. 1B), fixed "ab initio" and able to select, among all input wavelengths, two large wavelength sub-bands with a single spacing. So this device stops, among the plurality of the input wavelengths, only one optical wavelength **Lj**, or any contiguous subset of them, but allows the transit of the remaining carriers. The dimensions of the sub-bands and the spacing depend on the requirements. The size of the blocked band (in nm) is the same of that one of the F1 pass band.
- A 1x2 optical switch, **SW2,** receiving at the input **a** the signal from the filter F2 and having two outputs: **b** and **d**. The application of a dedicated control signal allows the routing of the input signal to one of the two outputs.
- A 4x1 optical combiner **C1**, or a combination of equivalent devices with a lower modularity, with four inputs and one output, able to combine the input signals from the switches SW1, SW2 and from the inputs **I2, I3**, and route them to the output **O1**.

In this structure, depicted in Fig. 1A, the plurality of the input wavelenghts at I1 is routed to the input a of the splitter S1.

The S1 outputs are connected to the inputs of F1 and F2 filters.

By remote control, the tunable filter F1 allows to select one of the multiplexed components or a sub-band of contiguous components, from the plurality of those contained in the input signal I1.

By remote control, the filtering element F2 stops the transmission of the optical component (or, with more generality, the optical contiguous carrier subset) selected by the filter F1. The outputs of F1 and F2 are connected to the SW1 and SW2 inputs, respectively.

Setting the switches to route the signal to the output d, the two carrier subsets coming from F1 and F2 can be extracted at the outputs O2 and O3, respectively.

Setting the switches to route the signal to the output b, the two signals proceed towards two of the four input ports of the combiner C1. The other two inputs I2, I3, can be used for the insertion of two new carrier subsets.

The added components can have the same wavelengths of the carriers extracted at the output O2, or can have different wavelengths.

In this way, when both SW1, SW2 switches are routing the signal to the ouput b, C1 combines at its output the subset of the carriers coming from the switches outputs.

When one of the SW1, SW2 switches is routing the signal to the ouput d, the wavelenghts extracted by one of the two outputs O2, O3 can be replaced by new carriers through one of the inputs I2, I3. In this case, C1 combines at its output the wavelenghts coming from the output b of the switch with those coming from the inputs I2,I3, and a new plurality of carriers appears at the egress O1.

Finally, when SW1 and SW2 are routing the signal to the ouput d, the whole plurality of input carriers can be extracted through the outputs O2, O3, and a new plurality of carriers can be added though the inputs I2, I3 and appears at the egress O1. In this way, the module TF&BP allows to extract from O2 and insert through I2 any wavelength and allows to make a cascading configuration of modules by using the couple of ports O3, I3.

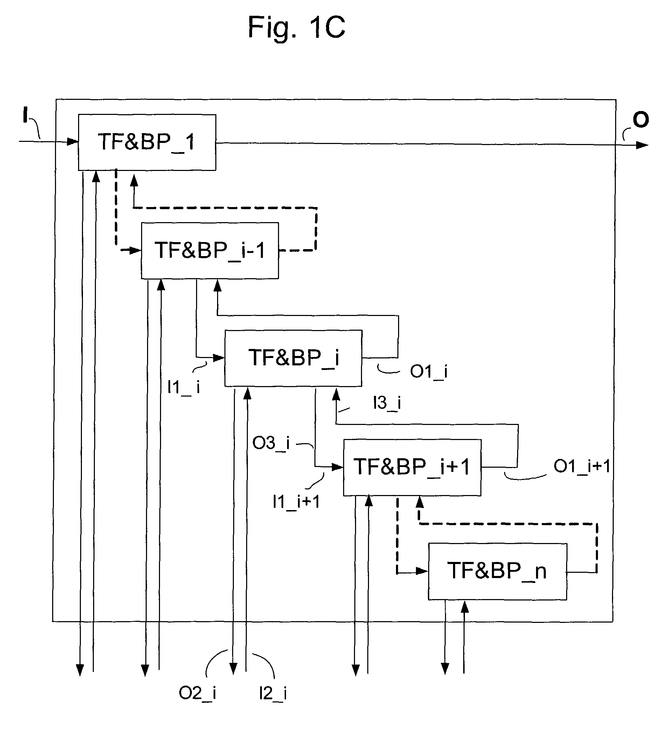

An N carrier, flexible and scalable structure with satisfactory transmission performances is depicted in Fig. 1C.

Here, the scalar structure consists of n modular units **TF&BP_1, TF&BP_i-1, TF&BP_i, TF&BP_i+1, TF&BP_n,** where n is an integer number that can be equal to 1 or to any multiple of 2 and can have the maximum value N.

In each modular unit TF&BP_i one of the multiplexed channels at the input **I1_i** is selected by the filter F1_i and extracted through the output **O2_i**; a new component can be inserted at the input **I2_i**.

The remaining channels transit from the filter F2_i to the switch SW2_i and can be extracted setting the switch to route the signal to the output d and then sent to the output **O3_i**, which is, on its turn, connected to the input **I1_i+1** of an identical module placed according to a cascade configuration.

The output **O1_i+1** of the successive unit can be connected to the input **I3_i** of the previous module TF&BP_i, so that at the output **O1_i** of this last the new plurality of multiplexed signals is obtained.

In this particular modular structure, the totality of carriers at the input **I** can be managed, in terms of extraction, insertion and transit operations (100% add/drop capacity), through the cascade of n identical TF&BP modules, where n coincides with the number of wavelengths to be extracted/inserted.

Other important feature of this structure is the bit rate transparency. In fact, this architecture can easily manage signals at 2.5, 10 and 40 Gb/s, with different wavelength spacing. The filtering properties of the filters F1 and F2 can be achieved by employing particular technologies (for example, the "Thin-Film") that allow to treat indifferently signals at 2.5, 10 and 40 Gb/s with 0.4, 0.8 and 1.6 nm spacing.

Therefore this architecture allows to get the same flexibility of the solution based on the WB (see known art), but with better scalability and transparency.

Furthermore, referring to .WO 98/ 18231, the solution, here exposed, the same flexibility, transparency and scalability properties are obtained with a simpler architecture, particularly suitable for a metropolitan network.

This architecture could not be suitable for managing components with wavelength spacing as narrow as 0.2 nm and modulation rate above 2.5 Gb/s. In this case, technological limits for the filtering elements F1, F2 could emerge.

The flexibility and the filtering performances of the module TF&BP are improved introducing a new interleaving filtering element and thus obtaining a new basic unit named **Interleaved Tunable Filter & Blocker Module (ITF&B)**.

The basic architecture of this unit, as represented in Fig. 2A, consists of the following four fundamental elements:
- An optical tunable filter **F3**, with a characteristic transmission function **3** (see Fig. 2B), fixed "ab initio" and able to select, within a wavelength multiplexed signal in the third optical window band (1480-1620 nm, according to the ITU-T grid, G.692 Recc.), a sub-set **4** (see Fig. 2B) of wavelengths spaced of a regular quantity equal to **nDL** (where n, identified as the interleaving factor, can assume the value of 1 or of an even integer , and DL represents the grid of the WDM signal in nm) (see Fig. 2B). The spacing DL is typically between 0.2 and 0.8 nm and, according to the requirements, can have any maximum value. For this characteristic, this filter will be identified as an interleaving filter.
- One 1x2 optical switch **SW3,** with one input **a** and two outputs: **b** and **d**, capable to route, through the application of a control signal, the input signal to one of the two outputs.
- A **TF&BP** module, as previously described.
- A 2x1 optical combiner **C3**, with two inputs and one output, able to provide at its output a signal formed by the combination (sum) of the two input signals.

In this structure (Fig. 2A), by remote control, the interleaving filtering element F3 selects, among all the wavelengths at its input I4, a subset of carriers spaced of nDL nm (fig.2B).

The carrier subset coming out of the filter F3 is sent to the input of the switch SW3. The outputs b and d of the switch SW3 are connected to one of the inputs of the combiner C3 and to the input of a module TF&BP, rescpectively.

The module TF&BP is of the pluggable type, and is inserted only when needed.

This is the case when the switch SW3 is routing the signal to the ouput d and the TF&BP module is used to select (drop and/or insert) a wavelenght belonging to the subset produced by the F3 filter. When this is not needed, with the switch SW3 routing the signal to the ouput b, the module ITF&B works like a "Pass-Through" device, and it only selects a pre-defined subset of carriers which are routed to the output O4. In this case the module TF&BP is not plugged-in. The possibility to insert/deinsert the TF&BP module in the modular unit ITF&B , according to the node needs, justifies the attribute of "Pluggable" given to it.

The presence of the interleaving filter F3 that selects, within the multiplexed components, a subset of carriers with a larger spacing, makes the realization of the filtering elements F1 and F2 much simpler.

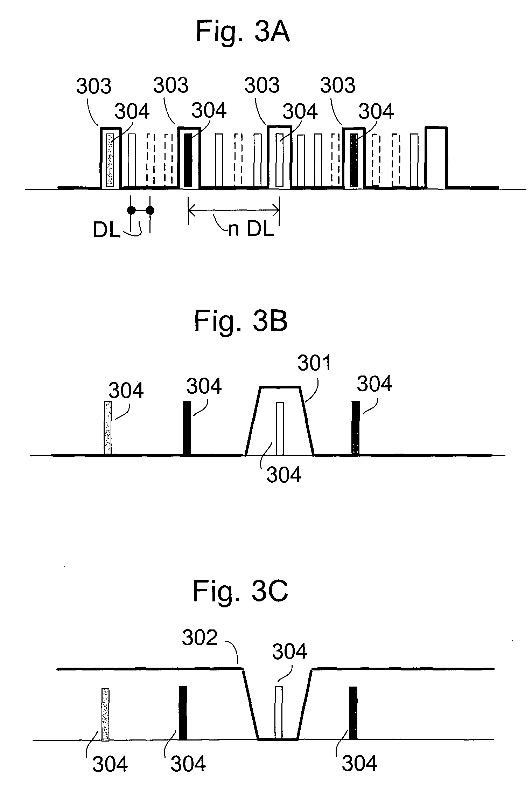

As depicted in Fig. 3A, DL and nDL (both in nm) are respectively the spacing of the original carriers of the input WDM signal, and **304** is the subset generated by the filtering characteristic **303** of the filter F3; in this case the filtering characteristic **301** (Fig. 3B) of the filter F1 and the filtering characteristic **302** (Fig.3C) of the filter F2, used to extract/insert a single component, can be significantly relaxed and be achieved based on an inter-band spacing of nDL rather than DL.

This solution presents a great advantage when a flexible and scalable OADM must be realized.

In fact, this architecture offers the possibility to minimize the number of sophisticated filtering elements, generally expensive and devoted to the selection of channels with extremely narrow spacings (0.2 and 0.4 nm). In this case, these devices are the interleaving filters only and their number in the OADM can be limited and optimized according to the requirements of the specific implementation.

Starting from the ITF&B configuration described in the Fig.2A, the solution depicted in Fig.4 is obtained by substituting the single TF&BP module of Fig.2A with the cascading TF&BP configuration described in Fig. 1C.

In this structure (Fig. 4), by remote control, the interleaving filtering element F3 selects, among all the wavelengths at its input I4, a subset of carriers spaced of nDL nm.

In this particular modular structure, the totality of the carriers coming out of the filter F3 can be managed, in terms of extraction, insertion and transit operations (100% add/drop capacity), through the cascade of n identical TF&BP modules, where n coincides with the number of wavelengths to be extracted/inserted.

A further OADM architecture of a preferred embodiment of the invention is depicted in Fig. 5.

This solution, named **(N,n)ITF&BGroup**, is based on the module ITF&B (see Fig. 2A, Fig.2B, Fig. 3A and Fig. 3B) and allows the implementation of an OADM suitable also for very narrow spacing metro application, and equipped with a reduced number of filtering elements.

The Fig. 5 shows an n/N OADM structure, consisting of n modular units ITF&B, where n is an integer number which can assume any value in the range :n = {2,4,8,....,N/2}.

The input signal I, made of N different wavelengths, is sent to **Sn,** a splitter 1xn.

The n outputs of this splitter are connected to the inputs I1 of the n modules ITF&B.

Then each module ITF&B receives, at its input I1, all the wavelengths contained in the input signal I and, thanks to the tuning property of the filter F3, selects a subset of wavelengths with a larger spacing (**interleaved wavelengths or interleaved sub. band**).
- The filter F3, belonging to the first ITF&B module, selects the subset L1, Ln+1 ... Lpn+1 ... Lmn+1
- The filter F3, belonging to the second ITF&B module, selects the subset L2, Ln+2 ... Lqn+2 ... Lmn+2
- The filter F3, belonging to the ITF&B module number i, selects the subset Li, Ln+i ... Lrn+i ... Lmn+i
- The filter F3, belonging to the ITF&B module number n, selects the subset Ln, Ln+n ... Lhn+n ... LN

Obviously, the superposition of the interleaved sub-bands selected by the n tunable filters F3 gives the totality of the N wavelengths constituting the DWDM system.

The number n of the modules ITF&B coincides with the interleaving factor of the filter F3.

For example, if N=16 and the interleaving factor of the filter F3 is n = 4, than the number of the ITF&B modules will be the same (=4) and the number of wavelengths contained in the F3 filter output signal will be N/n=4.

In each unit ITF&B the subset of interleaved carriers coming out of the filter F3, is than filtered in the TF&BP module, in a complementary way, by the tunable filtering pairs F1 and F2. Thanks to the tuning properties of these filters, any wavelength (Lrn+i) contained in the subset produced by F3 can be selected by the element F1 and extract from the output 02 setting the switch SW1 to route the signal to the output d; as well as a new component (L'rn+i) can be inserted through the input I2.

Correspondingly, the filter F2 can be tuned (by remote control) in such a way to block the wavelength selected by the filter F1 and to allow the transit of the remaining components, throughout the output b of the switch SW2, towards the output O1. Here they will reappear together with the wavelengths inserted through the input I2.

The outputs O1 of the modules ITF&B are connected to the n inputs of a nx1 optical combiner **Cn** so that both the passing-through components together with those inserted through I2 will reappear at the output O of the combiner Cn, as the resulting multiplexed signal exiting the OADM.

Thanks to the "Pass-Through" option, the size/cost of a node can scale according to the number of wavelengths which effectively need to be added/dropped. In fact the TF&BP module contained in each ITF&B is not required to be equipped since the beginning but it can be added every time a new wavelength needs to be dropped or inserted.

This structure is also very flexible because both the tunability of the filter F3, which allows to choose any of the n interleaved subsets forming the N wavelengths WDM system, and the tunability of the filters F2 and F3 that allow to choose any of the n/N contiguous components contained in it; this with the only limitation that, in order to avoid a carrier overlapping, two filters F3 can't be tuned on the same sub-band.

The opportunity to get wavelength tunable laser sources makes this architecture very attractive also from the point of view of its reconfigurability.

Connecting optical transmitters, equipped with tunable sources, to the inputs I2 of the n modules, it is possible to reconfigure the same structure over a wide sub-band both in terms of extracted and of inserted wavelengths. Generally, these sources allow to select any wavelength within a range of 4 or 8 assigned contiguous wavelengths, with 0.4 or 0.8 nm spacing and can be modulated up to 10 Gb/s. This means that, such an OADM can manage an 80 Gb/s transmissive sub-band with a full flexibility.

Making a comparison with the known art once again, the architecture based on the modular unit ITF&B offers characteristics of scalability and flexibility that are comparable to those of WO 98/18231, but avoids any redundancy of technology advanced components that makes that solution expensive and not very attractive for a metro ring application. If compared with the Wavelength Blocker architecture, this structure offers a larger capability of managing very dense spacing system and, above all, excellent scalability. In fact, if the subset of contiguous carriers to be extracted/inserted has to be increased, the configuration of Fig. 5 can be upgraded by adopting the OADM structure depicted in Fig. 6.

As shown above, any subset of n contiguous carriers to extract/insert (see the previous case in Fig. 5) is flexibly managed by using a structure with n modules ITF&B.

According to a further aspect of the invention, the number of carriers to extract/insert can be progressively increased, by multiples of n, simply replicating, according to the cascading configuration of Fig. 6, the functional group **(N,n)ITF&BGroup** previously described.

In this cascade, each group **(N,n)ITF&BGroup** is connected to the following group via a 2x2 switching element **SW**. According to the configuration chosen, the switch, remotely controlled, can connect the ports **a** and **b**, **a** and **d**, **c** and **d** realizing the different configuration required in the composite structure.

Referring to the Fig. 5, the capacity of an OADM made only of one block **(N,n)ITF&Bgroup**, managing up to n contiguous wavelengths, can be extended if its output O is connected to the input I of a second identical **(N,n)ITF&BGroup** block.

This is achieved by simply reconfiguring the switch placed immediately after, from the configuration a-b, c-d, to the configuration a-d, c-b.

In the second **(N,n)ITF&BGroup** block, n contiguous wavelengths belonging to any other sub-band will be managed.

The previous structure can be iterated as long as is needed until all the N wavelengths of the system are accessed. The output O of the last block (K-th block, in the figure) that extracts/inserts the n carriers belonging to the last subset, throughout the port a of the last switch (K-th), set in position a-b, is connected to the port c of the previous switch (the (K-1)-th) that, as mentioned before, is switched towards to the port b. The signal exiting the port b of this device is sent to the port c of the (K-2)-th switch and this succession is progressively repeated for all switches, so that the port b of the first switch remains the egress port of the whole OADM.

More solutions, apart from those reported here, can be obtained by combining in different ways the modules TF&BP and ITF&B described before, allowing for an optimized solution fitting the specific network requirements. For example, a less flexible but cheaper version of the solution described in Fig. 6 can be obtained starting from the configuration of Fig. 5, by using the ports I3/O3 of each module ITF&B to add, according to a cascading configuration as described in Fig. 4, a number of modules TF&BP equal to the number of wavelengths, belonging to the interleaved subset selected by the filter F3, that must be extracted/inserted.

The Applicant has demonstrated how the OADM architectures, here described, exhibit evident characteristics of simplicity, flexibility, scalability and how the modules TF&BP, ITF&B, objects of this invention, are particularly suitable for their utilization, in so many different OADM variants each of them optimized, in terms of costs and sizes , for the specific requirements of the metropolitan network.

## Claims

1. Optical Add-Drop multiplexer or OADM for WDM systems of the kind including a plurality of first modular units (TF&BP) for the optical filtering, the transit and the extraction of a plurality of optical signals each one of them associated to a carrier with a different wavelength and for the insertion of a further plurality of optical signals; said first modular units being adapted to implement a first scalar structure and being adapted to receive contiguous group of wavelengths within the ITU-T grid , **characterized in that** said scalar structure consists of n of said modular unit, where n is an integer number that can be equal to 1 and can have the maximum value N, and the totality of carriers at the input of a first modular unit can be managed through the cascade of n identical first modular units each of them including the following optical components:
- a 1x2 optical splitter (**S1)** able to split the input signal (**I1)** onto two replica at its output;
- a first optical wavelength tunable filter (**F1)**, receiving the input signal from the splitter (S1), able to select either a single optical wavelength (**Lj**) within said ITU-T grid or any contiguous group of wavelengths in the same grid;
- a first 1x2 optical switch, (**SW1)**, receiving at a first input (**a)** the signal from the filter (F1) and having a first and a second output (**b** and **d)**;
- a blocking tunable filter (**F2)**, able to stop, among the plurality of the input wavelengths, only one optical wavelength (**Lj**), or any contiguous subset of them, and able to allow the transit of the remaining carriers;
- a second 1x2 optical switch, (**SW2)**, receiving at a first input (**a**) the signal from the blocking filter (F2) and having a first and a second output (**b** and **d)** ;
- a first optical combiner (**C1)**, able to combine the input signals from the first and second optical switches (SW1, SW2) and the optical signals (**I2**, **I3)** to be inserted, and able to route them to the output (**O1)**.

2. The optical Add-Drop multiplexer of claim 1, **characterized in that** in the first modular unit i (TF&BP_i) of the combination:
- one of the multiplexed channels at the input **I1_i** is selected by said first filter F1_i and extracted through the output **O2_i** of said first optical combiner and a new component can be inserted at the input **I2_i**.
- the remaining channels transit from the blocking tuneable filter F2_i to the second optical switch SW2_i and can be extracted setting the switch to route the signal to the output d and then sent to the output **O3_i**, which is, on its turn, connected to the input **I1_i+1** of an identical module placed according to a cascade configuration.
- the output **O1_i+1** of the successive unit can be connected to the input **I3_i** of the previous module TF&BP_i, so that at the output **O1_i** of this last the new plurality of multiplexed signals is obtained.

3. The optical Add-Drop multiplexer of claim 1, **characterized in that** includes at least one second modular unit (ITF&B) including the optical components of said first modular unit and including also:
- an interliving filter (**F3)** able to select a sub-set **(I4)** of wavelengths spaced of a regular quantity equal to **nDL**, where n identified as the interleaving factor can assume the value of 1 or of an even integer and DL represents the grid of the WDM signal in nm;
- a third optical switch (**SW3**) having the input (a) connected at the output of the interliving filter (F3) and a first output (d) connected at the input of said optical splitter (S1);
- a second optical combiner (C3) having a first input connected at the second autput (b) of said third optical switch (SW3) and a second input connected to the output of said first optical combiner (C1).

4. The optical Add-Drop multiplexer of claim 3, **characterized in that** the output (d) of the third optical switch (SW3), is connected to the input (I1) of the first unit module of a scalar structure, and the second optical combiner (C3) receives the output (O1) of such first unit module of a scalar structure, where that scalar structure consists of n of said first modular units i (TF&BP_i) and where n is an integer number that can be equal to 0 and can have the maximum value N.

5. The Optical Add-Drop Multiplexer ((N,n)ITF&BGroup) of claim 3, **characterized in that** includes a plurality of said second modular units (ITF&B) and including also:
- a 1xn optical splitter (**Sn)** able to split the input signal (**I)**, made of N different wavelengths, onto n replica at its output, where n can be equal to 2^{m} ( where m is an integer) and can have the maximum value N/2 and coincides with the interleaving factor of said interliving filter (F3);
- n of said second modular units (ITF&B) receiving the input signal from the 1xn optical splitter (Sn), being able to select a subset of wavelengths with a larger spacing and being able to extract through its output (**O2)** or insert through its input (**I2)** a single optical wavelength ;
- a nx1 optical combiner (Cn) having one output (O) and receiving at the n inputs the outputs (O1) of the n second modular units (ITF&B).

6. The Optical Add-Drop Multiplexer of claim 5, being adapted to implement a second scalar structure (Fig.6) able to manage the totality of carriers at the input of the first OADM ((N,n)ITF&BGroup) of the combination through the cascade of the K identical OADM, **characterized in that** each OADM is connected with an optical switch 2x2 having:
- a first input (**a)** receiving the totality of carriers from the output O_i of an OADM, where i is an integer number that can be equal to 1 and can have the maximum value K, and able to switch such carries to the first output (**b**) or to the second output (**d**)
- a second input (**c**) connected to the first output (**b**) of a further optical switch of the cascade or not connected;
- a first output (**b**) connected to the second input **(c**) of the previous optical switch of the cascade or to the output O of the combination;
- a second output (**d**) connected with the input I_i of a further OADM of the cascade or not connected.

7. The Optical Add-Drop Multiplexer of claim 5 **characterized in that** each of said second modular units (ITF&B) are adapted to handle n wavelengths by means of a combination of n identical first modular units (TF&BP) connected as claimed in claim 4.
